# EUROPÄISCHE PATENTSCHRIFT

(11) **EP 0 809 712 B1**
(45) Veröffentlichungstag und Bekanntmachung des Hinweises auf die Patenterteilung: **30.10.2002**
(21) Anmeldenummer: 96903983.3
(22) Anmeldetag: 05.02.1996
(51) Int. Cl.: C14C 9/00, C11D 1/66, C11D 1/52, C11D 1/83

(54) **VERWENDUNG VON ZUCKERTENSIDEN ZUR BEHANDLUNG VON LEDERN UND PELZEN**
USE OF SUGAR TENSIDES AS TREATMENT AGENTS FOR LEATHERS AND HIDES
UTILISATION DE TENSIO-ACTIFS DE SUCRE COMME AGENTS DE TRAITEMENT POUR CUIRS ET PEAUX

(30) Priorität: 13.02.1995 DE 19504643
(43) Veröffentlichungstag der Anmeldung: 03.12.1997
(73) Patentinhaber: Cognis Deutschland GmbH & Co. KG, 40589 Düsseldorf (DE)
(72) Erfinder: KAHRE, Jörg, D-40789 Monheim (DE); WEGENER, Ingo, D-40589 Düsseldorf (DE); FABRY, Bernd, D-41352 Korschenbroich (DE)
(86) Internationale Anmeldenummer: EP9600467
(87) Internationale Veröffentlichungsnummer: WO96025523

(56) Entgegenhaltungen:
- DE-A- 3 506 838
- DE-A- 3 931 978
- DE-A- 4 414 696
- US-A- 4 104 175

## Beschreibung

### Gebiet der Erfindung

Die Erfindung betrifft Mittel zur Behandlung von Ledern und Pelzen, enthaltend Zuckertenside sowie die Verwendung von Zuckertensiden zur Behandlung von Ledern und Pelzen.

### Stand der Technik

Neben den Gerbstoffen sind Fettungsmittel die wichtigsten Hilfsmittel, um den Charakter von Leder zu prägen. Die Wirkung der Fettungsmittel kommt durch eine faserisolierende Schmierung und durch eine Hydrophobierung zustande.

Durch Umhüllung der Lederfasern mit einem Fettfilm wird die gegenseitige Reibung verringert und demzufolge die Geschmeidigkeit und Dehnbarkeit des Gewebes verbessert. Das hat positive Auswirkungen auf die Reißfestigkeit des Leders, denn in einem dehnbaren Werkstoff richten sich viele Fasern bei Zugbeanspruchung in der Zugrichtung aus und setzen dann dem Zerreißen einen größeren Widerstand entgegen als dieselben Fasern innerhalb eines spröden Werkstoffes. Durch die Hydrophobierung werden darüber hinaus gerbende Effekte erzielt, da sie mit einer Verdrängung von Wasser aus der Haut verbunden ist.

Als Lederfettungsmittel werden im allgemeinen pflanzliche und tierische Öle, Fette und Wachse eingesetzt, ferner die aus diesen Stoffen durch chemische Umwandlung gewonnenen Hydrolyse-, Sulfierungs-, Oxidations- und Härtungsprodukte und schließlich mineralische Fettungsmittel; im einzelnen:
o Die verseifbaren Fette und Öle sowie die natürlichen wachse und Harze gehören zu den Estern. Unter ölen und Fetten werden dabei vom Lederfachmann Ester aus Glycerin und Fettsäuren bezeichnet, die bei Raumtemperatur fest bzw. flüssig sind. Zur Lederfettung werden dabei aus der Gruppe der tierischen Fette insbesondere Trane, Fischöl, Rindertalg und Rinderklauenöl, aus der Gruppe der pflanzlichen Fette Rizinusöl, Rüböl und Leinöl herangezogen. In Wachsen und Harzen sind die Fettsäuren statt mit Glycerin mit höhermolekularen Alkoholen verestert. Beispiele für Wachse sind Bienenwachs, chinesisches Wachs, Caranubawachs, Montanwachs und Wollfett; zu den wichtigsten Harzen zählen Kolophonium, Juchtenöl und Schellack.
o Durch chemische Umwandlung pflanzlicher und tierischer Fette erhält man Produkte, die wasserlöslich sind und die darüber hinaus in unterschiedlichem Maße emulgierend auf wasserunlösliche Fettstoffe wirken. Bekannt sind etwa die sulfierten wasserlöslichen Öle verschiedenster Art, die durch Oxidation veränderten Trane, die als Dégras oder Moellon bezeichnet werden, ferner die Seifen, die bei der hydrolytischen Spaltung natürlicher Fette entstehen, gehärtete Fette sowie schließlich freie Fettsäuren wie Stearinsäure als Einbrennfette. Die meisten tierischen und pflanzlichen Fette weisen eine gewisse Affinität zur Ledersubstanz auf, die durch die Einführung oder Freilegung hydrophiler Gruppen noch beträchtlich gesteigert wird.
o Wichtig für die Lederherstellung sind weiter die mineralischen Fettungsmittel. Diese Kohlenwasserstoffe sind den natürlichen Fetten und ölen in manchen Eigenschaften ähnlich, lassen sich jedoch nicht verseifen. Es handelt sich um Fraktionen der Erdöldestillation, die in flüssiger Form Mineralöl, in pastöser Form Vaseline und in fester Form Paraffin genannt werden.

In vielen Fällen bilden sich jedoch auf der Oberfläche der gegerbten und gefetteten Leder im Laufe der Zeit unerwünschte Flecken, die als "Fettausschläge" (fatty spew) bezeichnet werden. Fettausschläge entstehen vornehmlich auf chromgegerbten Ledern nach kürzerer oder längerer Lagerung als weißer, oft schleierartiger Belag, der nur einzelne Stellen oder auch die ganze Lederfläche bedeckt. Der Ausschlag ist auf ein Austreten von festen Fettstoffen aus dem Leder zurückzuführen. Er kann durch das an sich im Leder vorhandene Naturfett oder durch Fettstoffe verursacht sein, die erst im Zuge der Fettung der Leder einverleibt worden sind.

Zum Fetten von Leder benutzte Fettgemische neigen insbesondere dann zur Bildung von Ausschlag, wenn sie viel freie Fettsäuren enthalten. Freie Fettsäuren weisen im allgemeinen einen höheren Schmelzpunkt auf als ihre Glyceride. Die hydrolytische Spaltung von Fettstoffen bei der Lagerung des Leders erhöht entsprechend die Gefahr des Auftretens von Fettausschlägen.

Seifen und Lickerfette werden in Chromleder, besonders in nicht genügend entsäuertem Chromleder, unter Freisetzen von Fettsäuren gespalten. Sulfierte Öle und Fette weisen eine unterschiedlich starke Neigung zur Bildung von Pettausschlägen auf, die Ausschlagsneigung geht mit längerer Lebensdauer im allgemeinen zurück [vgl. J.Int.Soc.Leath.Trad.Chem. 47, 379 (1952)].

Fettausschläge treten umso leichter auf, je mehr das Leder zur Ausschlagsbildung neigende Fettstoffe enthält. Für den Umfang und die Zusammensetzung des Ausschlags sind Menge, Zusammensetzung und Lage des im Leder vorhandenen Fettgemisches aus Naturfett und Lickerfett maßgebend. Locker strukturiertes Leder neigt weniger zur Ausschlagsbildung als Leder mit dichtem Fasergefüge. Fettausschläge werden bei niedrigen Temperaturen häufiger beobachtet als bei wärmeren Außentemperaturen.

Die kristallinen Fettausschläge entwickeln sich in den Haarlöchern und Drüsenkanälen, wobei zunächst kleine Kristalle in der Tiefe gebildet werden, die allmählich als größere Fettkristalle das ganze Haarloch ausfüllen, über die Lederoberfläche hinausquellen und zu einem dichten Kristallfilm verfilzen. Alle Fette, die Stearin- oder Palmitinderivate enthalten, können kristalline Fettausschläge verursachen, mit zunehmender Konzentration wird die Ausschlagsgefahr vergrößert **[Ledertechn.Rundsch. 1 (1949)].**

Insbesondere neigen die sogenannten Neutralfette, d.h. solche zur Lederfettung geeigneten Substanzen, die keine ionischen Gruppen im Molekül enthalten, z.B. Fette, Wachse und Kohlenwasserstoffe, zur Bildung von Fettausschlägen. Besonders kritisch sind dabei diejenigen Neutralfette, die Stearin-und/oder Palmitinderivate darstellen, wie etwa entsprechende Triglyceride oder die freien Fettsäuren.

Da im Zuge der Lederverarbeitung, jedoch nach dem Gerben, ohnehin als nahezu obligatorischer Arbeitsgang eine Fettung er- forderlich ist, um die angestrebten Produkteigenschaften zu erreichen, ist es in der Praxis üblich geworden, mit speziel- len synthetischen Fettungsmitteln zu arbeiten, deren Neigung zur Bildung von Fettausschlag gering ist.

Eine in dieser Hinsicht üblicherweise eingesetzte Klasse von Fettungsmitteln sind halogenierte Verbindungen wie Chlorkohlenwasserstoffe. Die steigenden ökologischen und toxikologischen Anfoderungen an Mittel, die in die Umwelt gelangen, bzw. mit denen der Verbraucher in Berührung kommt, machen jedoch diese Substanzklasse zunehmend unattraktiv.

Neben anionischen Tensiden wie beispielsweise sulfierten Fetten und Ölen oder Sulfosuccinaten haben auch kationische Verbindungen wie beispielsweise das Dimethyldistearylammoniumchlorid als Fettungsmittel Bedeutung. Eine Übersicht zu diesem Thema von S.Gupta findet sich in **J.Am.Leath.Chem.Ass. 83, 239 (1988).** Kationische Tenside sind jedoch aus ökologischen Gründen in der Diskussion, außerdem ist bekannt, daß sie sich in der Regel nicht gemeinsam mit anionischen Tensiden einsetzen lassen, da es sonst zur Ausfällung von Salzen auf der Lederoberfläche kommt. Im übrigen sind ihre anwendungstechnischen Eigenschaften nicht in allen Fällen zufriedenstellend.

Die komplexe Aufgabe der Erfindung hat somit darin bestanden, neue Mittel für Leder und Pelze zur Verfügung zu stellen, die sich durch verbesserte ökotoxikologischen Eigenschaften auszeichnen und dem Leder einen besonders trocken-weichen Griff verleihen, das Dispergieren von Farbstoffen erleichtern und eine geringere Tendenz zu Fettaustrübungen aufweisen.

**DE 44 14 696 A1** beschreibt Detergensgemische mit verbessertem Schaumvermögen enthaltend a) Alkyl- und Alkenyloligoglycoside und anionische, nichtionische, kationische und/oder amphotere bzw. zwitterionische Tenside.

**DE 35 06 838 A1** beschreibt Lederbehandlungsmittel, die spezielle Alkanolamide sowie ggf. einen Gerbstoff enthalten, zum Fetten, Weichmachen und ggf. gleichzeitigen Gerben oder Nachgerben von Leder.

**DE 39 31 978 A1** beschreibt Lederbehandlungsmittel enthaltend spezielle Alkanolamide sowie zusätzliche Hilfsstoffe, wobei diese Mischungen zur Herstellung von weichen Ledern verwendet werden können.

**US 4,104,175** beschreibt quartäre Ammoniumverbindungen zur antistatischen Ausrüstung einer Reihe von Substraten.

### Beschreibung der Erfindung

Gegenstand der Erfindung ist die Verwendung von Zuckertensiden, die ausgewählt sind aus der Gruppe, die von
(a) Alkyl- und/oder Alkenyloligoglykosiden und/oder
(b) Fettsäure-N-alkylpolyhydroxyalkylamiden
gebildet wird, zur Verbesserung der Brillanz und Egalität beim Anfärben von Leder.

Überraschenderweise wurde gefunden, daß die erfindungsgemäßen Mittel mit einem Gehalt der genannten Zuckertenside nicht nur über eine besonders vorteilhafte ökotoxikologische Verträglichkeit verfügen, sondern Ledern und Pelzen auch eine verbesserte Schmalzig- bzw. Geschmeidigkeit, einen angenehmeren trockenen Weichgriff sowie eine erhöhte Hydrophobierung verleihen. Gleichzeitig wird eine geringere Tendenz zur Bildung unerwünschter Fettausschläge beobachtet. Die Mittel weisen ferner ausgezeichnete Dispergiereigenschaften auf, was beim Färben zu einer hohen Gleichmäßigkeit und daher einem verminderten Verbrauch an Farbstoff sowie beim Finishen zu einem abriebarmen Polymerüberzug führt.

### Alkyl- und/oder Alkenyloligoglykoside

Als Zuckertenside der Gruppe (a) kommen Alkyl- und Alkenyloligoglykoside in Betracht, die der allgemeinen Formel **(I)** folgen,

**R**^{**1**}**O-[G]**_{**p**} **(I)**

in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, und stellen bekannte Stoffe dar, die nach den einschlägigen Verfahren der präparativen organischen Chemie erhalten werden können. Stellvertretend für das umfangreiche Schrifttum sei hier auf die Schriften **EP-A1-0 301 298** und **WO 90/3977** verwiesen.

Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl-und/oder Alkenyloligoglykoside sind somit Alkyl- und/oder Alkenyloligoglucoside.

Die Indexzahl p in der allgemeinen Formel **(I)** gibt den Oligomerisierungsgrad (DP-Grad), d. h. die Verteilung von Mono-und Oligoglykosiden an und steht für eine Zahl zwischen 1 und 10. Während p in einer gegebenen Verbindung stets ganzzahlig sein muß und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl-und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt.

Der Alkyl- bzw. Alkenylrest R¹ kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese anfallen. Bevorzugt sind Alkyloligoglucoside der Kettenlänge C₈-C₁₀ (DP = 1 bis 3), die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole (DP = 1 bis 3).

Der Alkyl- bzw. Alkenylrest R¹ kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, sowie deren technische Gemische, die wie oben beschrieben erhalten werden können. Bevorzugt sind Alkyloligoglucoside auf Basis von gehärtetem C_{12/14}-Kokosalkohol mit einem DP von 1 bis 3.

### Fettsäure-N-alkylpolyhydroxyalkylamide

Als Zuckertenside der Gruppe (b) können Fettsäure-N-alkylpolyhydroxyalkylamide der Formel **(II)** eingesetzt werden, 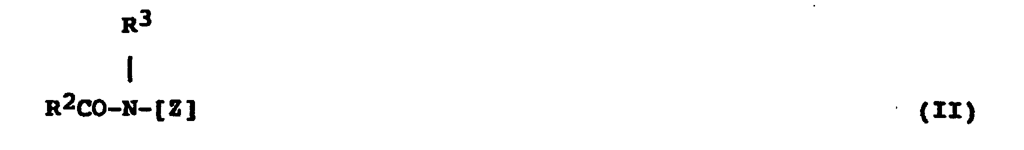 in der R²CO für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 12 Kohlenstoffatomen und 3 bis 10 Hydroxylgruppen steht.

Bei den Fettsäure-N-alkylpolyhydroxyalkylamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Hinsichtlich der Verfahren zu ihrer Herstellung sei auf die US-Patentschriften **US 1 985 424, US 2 016 962** und **US 2 703 798** sowie die Internationale Patentanmeldung **WO 92/06984** verwiesen. Eine Übersicht zu diesem Thema von H.Kelkenberg findet sich in **Tens. Surf.Det. 25, 8 (1988).**

Vorzugsweise leiten sich die Fettsäure-N-alkylpolyhydroxyalkylamide von reduzierenden Zuckern mit 5 oder 6 Kohlenstoffatomen, insbesondere von der Glucose ab. Die bevorzugten Fettsäure-N-alkylpolyhydroxyalkylamide stellen daher Fettsäure-N-alkylglucamide dar, wie sie durch die Formel **(III)** wiedergegeben werden: 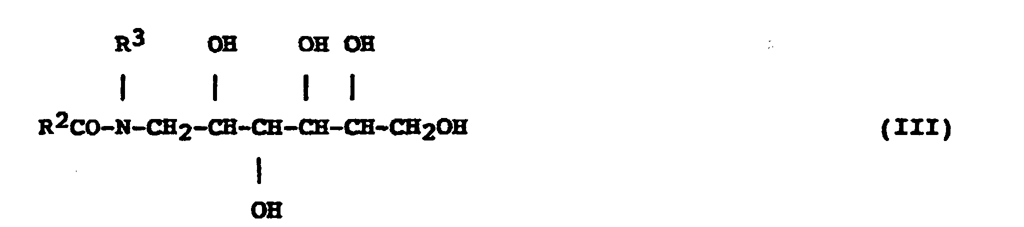 Vorzugsweise werden als Fettsäure-N-alkylpolyhydroxyalkylamide Glucamide der Formel **(III)** eingesetzt, in der R³ für Wasserstoff oder eine Methylgruppe steht und R²CO für den Acylrest der Capronsäure, Caprylsäure, Caprinsäure, Laurinsäure, Myristinsäure, Palmitinsäure, Palmoleinsäure, Stearinsäure, Isostearinsäure, ölsäure, Elaidinsäure, Petroselinsäure, Linolsäure, Linolensäure, Arachinsäure, Gadoleinsäure, Behensäure oder Erucaeäure bzw. derer technischer Mischungen steht. Besonders bevorzugt sind Fettsäure-N-alkylglucamide der Formel **(III)**, die durch reduktive Aminierung von Glucose mit Methylamin und anschließende Acylierung mit Laurinsäure oder C_{12/14}-Kokosfettsäure bzw. einem entsprechenden Derivat erhalten werden. Weiterhin können sich die Polyhydroxyalkylamide auch von Maltose und Palatinose ableiten.

Der Tensidanteil der erfindungsgemäßen Mittel - im einfachsten Fall gleichbedeutend mit dem Gehalt an Zuckertensiden - kann 1 bis 50, vorzugsweise 5 bis 30 Gew.-% - bezogen auf die Mittel betragen. Das Gewichtsverhältnis der Zuckertenside (a) und (b) ist wenig kritisch und kann 90 : 10 bis 10 : 90 betragen und liegt vorzugsweise im Bereich von 60 : 40 bis 40 : 60.

### Quartäre Ammoniumverbindungen

In einer bevorzugten Ausführungsform der Erfindung können die Zuckertenside in den erfindungsgemäßen Mitteln zusammen mit Stickstoffverbindungen ausgewählt aus der Gruppe, die von
(c) quartären Ammoniumverbindungen
(d) Esterquats und/oder
(e) Fettsäurealkanolamiden
gebildet wird, eingesetzt werden. Die Kombination aus Zuckertensiden und Stickstoffverbindungenhat sich insbesondere im Hinblick auf einen besonders angenehmen Weichgriff bewährt.

Quartäre Ammoniumverbindungen, die die Gruppe (c) bilden, folgen der allgemeinen Formel **(IV),** 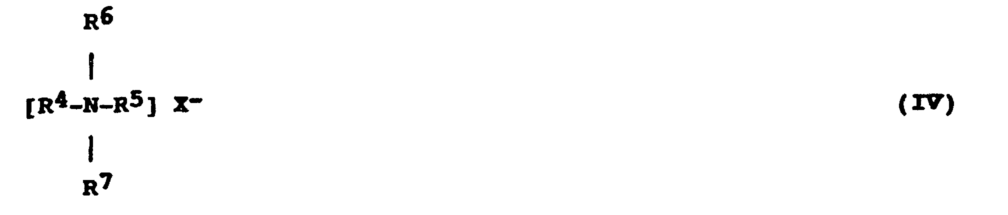 in der R⁴ und R⁵ unabhängig voneinander für einen linearen oder verzweigten, gegebenenfalls hydroxysubstituierten Alkyl-und/oder Alkenylrest mit 6 bis 22 Kohlenstoffatomen oder einen Benzylrest, R⁶ für R⁴ oder einen gegebenenfalls hydroxysubstituierten Alkylrest mit 1 bis 4 Kohlenstoffatomen, R⁷ für einen Alkylrest mit 1 bis 4 Kohlenstoffatomen und X für Halogenid steht. Gleichfalls ist es möglich, daß die Stickstoffgruppe Teil eines aliphatischen oder aromatischen Ringsystems mit 5 oder 6 Kohlenstoffatomen ist.

Typische Beispiele für geeignete quartäre Ammoniumverbindungen sind Dimethyldistearylammoniumchlorid, Cetyltrimethylammoniumchlorid und Benzyltrimethylammoniumchlorid.

### Esterquats

Als weitere Stickstoffverbindungen, die die Gruppe (d) bilden, kommen Esterquats in Frage. Hierunter werden im allgemeinen quaternierte Fettsäuretriethanolaminestersalze verstanden, die man nach den einschlägigen Methoden der präparativen organischen Chemie erhalten kann. In diesem Zusammenhang sei auf die Internationale Patentanmeldung **WO 91/01295** (Henkel) verwiesen, nach der man Triethanolamin in Gegenwart von unterphosphoriger Säure mit Fettsäuren partiell verestert, Luft durchleitet und anschließend mit Dimethylsulfat oder Ethylenoxid quaterniert. Stellvertretend für den umfangreichen Stand der Technik sei an dieser Stelle auf die Druckschriften **US 3915867, US 4370272, EP-A2 0239910, EP-A2 0293955, EP-A2 0295739** und **EP-A2 0309052** verwiesen.

Die quaternierten Fettsäuretriethanolaminestersalze folgen der Formel **(V)** 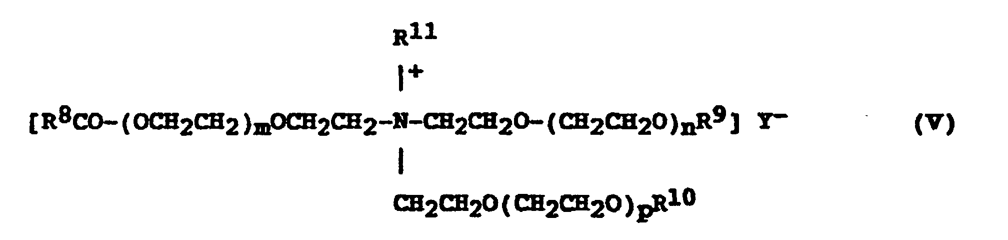 in der R⁸CO für einen Acylrest mit 6 bis 22 Kohlenstoffatomen, R⁹ und R¹⁰ unabhängig voneinander für Wasserstoff oder R⁸CO, R¹¹ für einen Alkylrest mit 1 bis 4 Kohlenstoffatomen oder eine (CH₂CH₂O)_{q}H-Gruppe, m, n und p in Summe für 0 oder Zahlen von 1 bis 12, q für Zahlen von 1 bis 12 und Y für Halogenid, Alkylsulfat oder Alkylphosphat steht.

Typische Beispiele für Esterquats, die im Sinne der Erfindung Verwendung finden können, sind Produkte auf Basis von Capronsäure, Caprylsäure, Caprinsäure, Laurinsäure, Myristinsäure, Palmitinsäure, Isostearinsäure, Stearinsäure, Ölsäure, Elaidinsäure, Arachinsäure, Behensäure und Erucasäure sowie deren technische Mischungen, wie sie beispielweise bei der Druckspaltung natürlicher Fette und Öle anfallen. Vorzugsweise werden technische C_{12/18}-Kokosfettsäuren und insbesondere teilgehärtete C_{16/18}-Talg- bzw. Palmfettsäuren sowie elaidinsäurereiche C_{16/18}-Fettsäureschnitte eingesetzt.

Zur Herstellung der quaternierten Ester können die Fettsäuren und das Triethanolamin im molaren Verhältnis von 1,1 : 1 bis 3 : 1 eingesetzt werden. Im Hinblick auf die anwendungstechnischen Eigenschaften der Esterquats hat sich ein Einsatzverhältnis von 1,2 : 1 bis 2,2 : 1, vorzugsweise 1,5 : 1 bis 1,9 : 1 als besonders vorteilhaft erwiesen. Die bevorzugten Esterquats stellen technische Mischungen von Mono-, Di- und Triestern mit einem durchschnittlichen Veresterungsgrad von 1,5 bis 1,9 dar und leiten sich von technischer C_{16/18}-Talg-bzw. Palmfettsäure (Iodzahl 0 bis 40) ab.

Aus anwendungstechnischer Sicht haben sich quaternierte Fettsäuretriethanolaminestersalze der Formel **(V)** als besonders vorteilhaft erwiesen, in der R⁶CO für einen Acylrest mit 16 bis 18 Kohlenstoffatomen, R⁹ für R⁸CO, R¹⁰ für Wasserstoff, R¹¹ für eine Methylgruppe, m, n und p für 0 und Y für Methylsulfat steht.

Neben den quaternierten Pettsäuretriethanolaminestersalzen kommen als Esterquats ferner auch quaternierte Estersalze von Fettsäuren mit Diethanolalkylaminen der Formel **(VI)** in Betracht, 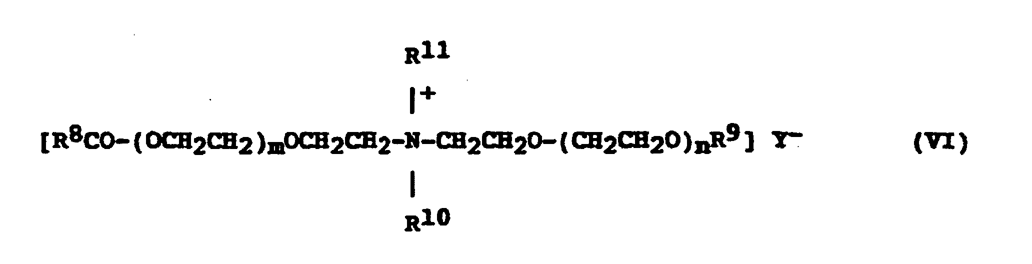 in der R⁸CO für einen Acylrest mit 6 bis 22 Kohlenstoffatomen, R⁹ für Wasserstoff oder R⁸CO, R¹⁰ und R¹¹ unabhängig voneinander für Alkylreste mit 1 bis 4 Kohlenstoffatomen, m und n in Summe für 0 oder Zahlen von 1 bis 12 und Y für Halogenid, Alkylsulfat oder Alkylphosphat steht.

Als weitere Gruppe geeigneter Esterquats sind schließlich die quaternierten Estersalze von Fettsäuren mit 1,2-Dihydroxypropyldialkylaminen der Formel **(VII)** zu nennen, 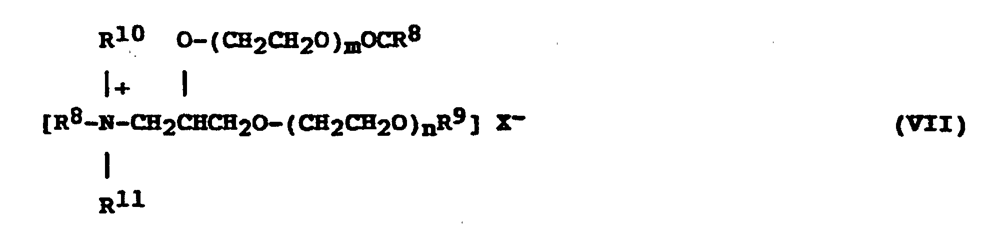 in der R⁸CO für einen Acylrest mit 6 bis 22 Kohlenstoffatomen, R⁹ für Wasserstoff oder R⁸CO, R⁹, R¹⁰ und R¹¹ unabhängig voneinander für Alkylreste mit 1 bis 4 Kohlenstoffatomen, m und n in Summe für 0 oder Zahlen von 1 bis 12 und Y für Halogenid, Alkylsulfat oder Alkylphosphat steht.

Hinsichtlich der Auswahl der bevorzugten Fettsäuren und des optimalen Veresterungsgrades gelten die für **(V)** genannten Beispiele auch für die Esterquats der Formeln **(VI)** und **(VII).** Üblicherweise gelangen die Esterquats in Form 50 bis 90 Gew. -%iger alkoholischer Lösungen in den Handel, die bei Bedarf problemlos mit Wasser verdünnt werden können.

Das Gewichtsverhältnis der Stickstoffverbindungen untereinander als auch das Gewichtsverhältnis von Zuckertensiden und Stickstoffverbindungen ist im wesentlichen unkritisch und kann jeweils 90 : 10 bis 10 : 90, vorzugsweise aber 60 : 40 bis 40 : 60 betragen.

### Fettsäurealkanolamide

Als weitere Stickstoffverbindungen kommen Fettsäurealkanolamide der Formel **(VIII)** in Betracht,

**R**^{**12**}**CO-NH-(CH**_{**2**}**)**_{**v**}**NH(CH**_{**2**}**)**_{**w**}**OH (VIII)**

in der R¹²CO für einen alipahtischen, gesättigten oder ungesättigten Acylrest mit 6 bis 22, vorzugsweise 12 bis 18 Kohlenstoffatomen und n und m unabhängig voneinander für Zahlen von 1 bis 5, vorzugsweise 2 oder 3 stehen.

Typische Beispiele sind Umsetzungsprodukte von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen, vorzugsweise Kokos- oder Talgfettsäure mut Aminoethylethanolamin.

### Alkyl- und/oder Alkenyl(ether)sulfate

In einer weiteren bevorzugten Ausführungsform der Erfindungen können die Zuckertenside auch mit anionischen Tensiden, vorvorzugsweise Alkyl- und/oder Alkenysulfaten kombiniert werden. Unter Alkyl- und/oder Alkenylsulfaten sind die Sulfatierungsprodukte primärer Alkohole und Alkoholethoxylate zu verstehen, die der Formel **(IX)** folgen,

**R**^{**13**}**O(CH**_{**2**}**CH**_{**2**}**O)**_{**b**}**-SO**_{**3**}**Z (IX)**

in der R¹³ für einen linearen oder verzweigten, aliphatischen Alkyl- und/oder Alkenylrest mit 6 bis 22, vorzugsweise 12 bis 18 Kohlenstoffatomen, b für 0 oder Zahlen von 1 bis 10 und Z für ein Alkyli- und/oder Erdalkalimetall, Ammonium, Alkylammonium, Alkanolammonium oder Glucammonium steht.

Typische Beispiele für Alkylsulfate und -ethersulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelen'schen Oxosynthese erhalten werden sowie deren Additionsprodukte mit 1 bis 10 und vorzugsweise 2 bis 5 Mol Ethylenoxid. Die Sulfatierungsprodukte können vorzugsweise in Form ihrer Alkalisalze, und insbesondere ihrer Natriumsalze eingesetzt werden. Besonders bevorzugt sind Alkylsulfate und -ethersulfate auf Basis von C_{16/18}-Talgfettalkoholen bzw. pflanzlicher Fettalkohole vergleichbarer C-Kettenverteilung in Form ihrer Natriumsalze. Besonders bevorzugt sind Mischungen von Alkyloligoglucosiden mit C_{12/18}-Kokosfettalkoholsulfaten bzw. -ethersulfaten im Gewichtsverhältnis 75 : 25 bis 25 : 75.

In Summe können die erfindungsgemäßen Mittel die Zuckertenside und die Alkyl- und/oder Alkenyl(ether)sulfate im Gewichtsverhältnis 90 : 10 bis 10 : 90 und vorzugsweise 60 : 40 bis 40 : 60 enthalten.

### Polymerdispersionen

Werden die erfindungsgemäßen Mittel weniger zum Fetten oder Färben, sondern bevorzugt zum Finish des Leders eingesetzt, enthalten sie in der Regel überwiegend wäßrige Polymerdispersionen. Typische Beispiele sind Dispersionen von Polyacrylaten, Polyurethanen, Casein, Nitrocellulosen sowie synthetischen Wachsen wie beispielsweise Polyolefinen und insbesondere Polyethylentypen. Im Zusammenhang mit diesen Polymeren wirken die Zuckertenside als Dispergatoren, wobei sie gegenüber bekannten Zusatzstoffen des Stands der Technik - wie z.B. Nonylphenolethoxylaten - den Vorteil eines geringeren Abriebs und einer besseren biologischen Abbaubarkeit aufweisen. Sollen die Zuckertenside zusammen mit Polymerdispersionen in Mitteln zum Finishen von Ledern und Pelzen eingesetzt werden, können die Bestandteile durch Vermischen in die Formulierung eingebracht werden. In einer besonderen Ausführungsform der Erfindung ist es jedoch auch möglich, die Zukkertenside zugleich als Emulgatoren in der Polymerisation der Monomeren einzusetzen, also eine - wäßrige - Polymerdispersion zu verwenden, die den Dispergator bereits enthält.

### Fettungsmittel

Die Fettungssmittel können neben den Zuckertensiden sowie gegebenenfalls Stickstoffverbindungen oder anionischen Tensiden weitere gebräuchliche Hilfs- und Zusatzstoffe enthalten. Hierzu zählen insbesondere Fettalkohole wie beispielsweise Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol und Erucylalkohol sowie deren technische Mischungen, die z.B. bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen. Bevorzugt sind techni- sche Fettalkohole mit 12 bis 18 Kohlenstoffatomen wie beispielsweise Kokos-, Palm-, Palmkern- oder Talgfettalkohol.

In einer bevorzugten Ausführungsform der Erfindung werden Kombinationen von Alkyloligoglucosiden und Fettalkoholen eingesetzt, die den gleichen Alkylrest aufweisen, also beispielsweise ein Kokos- oder Talgalkyloligoglucosid zusammen mit einem Kokos- oder Talgfettalkohol. Derartige technische Mischungen fallen bei der großtechnischen Herstellung von Alkyloligoglucosiden als Zwischenstufen an. Das Gewichtaverhältnis zwischen den Zuckertensiden, vorzugsweise den Alkyloligoglucosiden und den Fettalkoholen kann 90 : 10 bis 10 : 90 betragen und liegt vorzugsweise im Bereich 50 : 50 bis 80 : 20.

Üblicherweise beträgt der Anteil der Tenside - im einfachsten Fall also der Zuckertenside - an den erfindungsgemäßen Mitteln 15 bis 90 und vorzugsweise 20 bis 80 Gew.-% bezogen auf die Mittel. In der Regel werden die Mittel so dosiert, daß auf 1 kg Leder bzw. Pelz (berechnet als Falzgewicht) 20 bis 1000, vorzugsweise 30 bis 80 g des Mittels entfallen.

### Gewerbliche Anwendbarkeit

Zuckertenside verleihen Ledern und Pelzen einen besonders angenehmen trockenen Weichgriff. Sie weisen ausgezeichnete Dispergiereigenschaften auf und führen beim Färben zu einer hohen Brillianz und Egalität der Farbe; gleichzeitig wird auf diese Weise Farbstoff eingespart. Zusammen mit Polymerdispersionen zeichnen sie sich beim Lederfinish durch einen gegenüber Handelsprodukten verminderten Abrieb aus. Schließlich sind die Zuckertenside auch aus ökotoxikologischen Gründen einer Vielzahl anderer Stoffe vorzuziehen. Besonders vorteilhaft im Hinblick auf den Weichgriff ist die Kombination von Alkyloligoglucosiden mit kationischen Tensiden vom Typ der Esterquats, anionischen Tensiden vom Typ der Alkylsulfate und Fettalkoholen korrespondierender C-Kettenlänge.

Ein weiterer Gegenstand der Erfindung betrifft daher die Verwendung von Zuckertensiden der genannten Art zur Herstellung von Mitteln zur Behandlung von Ledern und Pelzen.

Die folgenden Beispiele sollen den Gegenstand der Erfindung näher erläutern, ohne ihn darauf einzuschränken.

### Beispiele

### Beispiel 1:

**Herstellung von Schafbekleidungsleder.** Wet blue-Material wurde zunächst gewaschen und anschließend nachgegerbt. Die Angaben zu Einsatzmengen und Zeitdauer der Verfahrensschritte sind in Tabelle 1 zusammengefaßt. Alle Prozentangaben verstehen sich bezogen auf das Falzgewicht.

**Tabelle 1:**

| Herstellung von Schafbekleidungsleder | | | |
|---|---|---|---|
| **Vorgang** | **Zugabe von** | **Menge Gew.-%** | **Dauer min** |
| Waschen | Wasser (40°C) neue Flotte | 200 | 10 |
| | Wasser (40°C) | 100 | 40 |
| | Natriumformiat | 1 | |
| | Natriumbicarbonat | 1 | |
| | Acrylatgerbstoff | 3 | |
| | Flotte abpülen (50°C) | | |
| Nachgerben, Färben | Wasser (50°C) | 100 | 30 |
| | Naphthalinkondensationspr. | 2 | |
| | Farbstoff | 3 | 30 |
| Nachgerben, Färben | Plantaren^{(R)} APG 1200¹⁾ | 1,5 | 40 |
| | Dehyquart^{(R)} AU 46²⁾ | 1,4 | |
| | Sulfatiertes Esteröl | 2 | |
| | Sulfitiertes Esteröl | 3 | |
| | Acrylatgerbstoff | 2 | 60 |
| | Ameisensäure Flotte abpülen (50°C) | 1 | 15 |

| | | | |
|---|---|---|---|
| 1) Kokosalkyloligoglucosid (Henkel KGaA, Düsseldorf/FRG) | | | |
| 2) Umsetzungsprodukt von teilgehärteter Palmfettsäure mit Triethanolamin (Molverhältnis 1,64 : 1), methylquaterniert, Methylsulfat-Salz (Pulcra S.A., Barcelona/ES) | | | |

Es wurde ein weiches Leder mit vollem, rundem Griff und gleichmäßiger, blumiger Färbung erhalten.

### Beispiel 2:

**Herstellung von Möbelleder.** Wet blue-Material wurde gewaschen, nachgegerbt, neutralisiert, gefärbt und gefettet. Die Angaben zu Einsatzmengen und Zeitdauer der Verfahrensschritte sind in Tabelle 2 zusammengefaßt. Alle Prozentangaben verstehen sich bezogen auf das Falzgewicht.

**Tabelle 2:**

| Herstellung von Möbelleder | | | |
|---|---|---|---|
| **Vorgang** | **Zugabe von** | **Menge Gew.-%** | **Dauer min** |
| Waschen | Wasser (45°C) neue Flotte | 200 | 10 |
| Nachgerben | Wasser (45°C) | 100 | 45 |
| | Chromsulfat (33 Gew.-%ig) | 2 | |
| | Phenolkondensationsprodukt | 2 | |
| | Natriumaluminiumsilicat Flotte abspülen (40°C) | 1 | |
| Neutralisation | Wasser (40°C) | 100 | 60 |
| | Natriumbicarbonat neue Flotte | 2 | |
| Färben und Fetten | Wasser (50°C) | 100 | 15 |
| | Naphthalinkondensationsprodukt | 2 | |
| | Ammoniak | 1 | |
| | Farbstoff | 3 | 45 |
| | Laurinsäure-N-methylglucamid | 1 | 45 |
| | Dehyquart^{(R)} AU 46 | 1 | |
| | Sulfatiertes Esteröl | 9 | |
| | Ameisensäure | 1 | 15 |
| | Ameisensäure Flotte abspülen (40°C) | 2 | 30 |

Es wurden tuchweiche, mollige, leicht schmalzige Möbelleder erhalten.

### Beispiel 3:

**Herstellung von Rindvelour.** Crustleder wurde broschiert und gefärbt. Die Angaben zu Einsatzmengen und Zeitdauer der Verfahrensschritte sind in Tabelle 3 zusammengefaßt. Alle Prozentangaben verstehen sich bezogen auf das Falzgewicht.

**Tabelle 3:**

| Herstellung von Rindvelour | | | |
|---|---|---|---|
| **Vorgang** | **Zugabe von** | **Menge Gew.-%** | **Dauer min** |
| Broschieren | Emulgade^{(R)} PL 1618³⁾ | 1 | 240 |
| | Ammoniak | 1 | |
| Färben | Wasser (60°C) | 300 | 60 |
| | Phenolkondensationsprodukt | 2 | |
| | Ammoniak | 1 | |
| | Farbstoff | 7 | |
| | Ameisensäure | 4 | 45 |
| | Dehyquart^{(R)} AU 46 gut waschen | 2,5 | 30 |

| | | | |
|---|---|---|---|
| 3) Technische Mischung aus Talgalkyloligoglucosid und Talgfettalkohol (Henkel KGaA, Düsseldorf/FRG) | | | |

Es wurde eine seidige Velourlederfaser mit brillianter Färbung und schönem Schreibeffekt erhalten.

### Beispiel 4:

**Herstellung von Rindoberleder.** Wet blue-Material wurde gewaschen, neutralisiert, abermals gewaschen und nachgegerbt. Die Angaben zu Einsatzmengen und Zeitdauer der Verfahrensschritte sind in Tabelle 4 zusammengefaßt. Alle Prozentangaben verstehen sich bezogen auf das Falzgewicht.

**Tabelle 4:**

| Herstellung von Rindoberleder | | | |
|---|---|---|---|
| **Vorgang** | **Zugabe von** | **Menge Gew.-%** | **Dauer min** |
| Waschen | Wasser (40°C) neue Flotte | 200 | 10 |
| Neutralisation | Wasser (40°C) | 100 | 15 |
| | Natriumformiat | 0,5 | |
| | Natriumaluminiumsilicat | 0,5 | |
| Waschen | Wasser (60°C) neue Flotte | 100 | 10 |
| Nachgerben | Wasser (60°C) | 100 | 15 |
| | Naphthalinkondensations-produkt | 2 | |
| | Farbstoff | 1 | 15 |
| Nachgerben | Acrylatgerbstoff | 2 | 15 |
| | Phenolkondensationsprodukt | 3 | 30 |
| | Plantaren^{(R)} PS 10⁴⁾ | 6 | 45 |
| | Ameisensäure | 0,5 | 15 |

| | | | |
|---|---|---|---|
| 4) Technische Mischung aus Kokosalkyloligoglucosid und Kokosalkohol+2EO-sulfat-Natriumsalz (Henkel KGaA, Düsseldorf) | | | |

Es wurde ein sehr weiches Leder mit guter Fülle und gleichmäßiger, brillianter Färbung erhalten.

## Patentansprüche

1. Verwendung von Zuckertensiden, die ausgewählt sind aus der Gruppe, die von
(a) Alkyl- und/oder Alkenyloligoglykosiden und/oder
(b) Fettsäure-N-alkylpolyhydroxyalkylamiden
gebildet wird, zur Verbesserung der Brillanz und Egalität beim Anfärben von Leder.

2. Verwendung nach Anspruch 1, wobei man Alkyl- und/oder Alkenyloligoglykoside der Formel **(I)**
**R**^{**1**}**O-[G]**_{**p**} **(I)**
in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, einsetzt.

3. Verwendung nach Anspruch 2, wobei man Alkyloligoglucoside einsetzt.

4. Verwendung nach den Ansprüchen 1 bis 3, wobei man Fettsäure-N-alkylpolyhydroxyalkylamide der Formel **(II)** 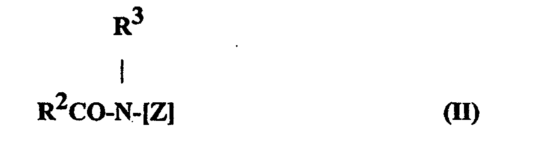 in der R²CO für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 12 Kohlenstoffatomen und 3 bis 10 Hydroxylgruppen steht, einsetzt.

5. Verwendung nach Anspruch 4, wobei man Fettsäure-N-alkylglucamide einsetzt.

6. Verwendung nach den Ansprüchen 1 bis 5, wobei man eine Kombination der Verbindungen a) und b) einsetzt.

7. Verwendung nach den Ansprüchen 1 bis 6, wobei man zusätzlich Stickstoffverbindungen einsetzt, die ausgewählt sind aus der Gruppe die von
(c) quartären Ammoniumverbindungen,
(d) Esterquats und/oder
(e) Fettsäurealkanolamiden
gebildet wird.

8. Verwendung nach Anspruch 7, wobei man eine Kombination einsetzt, die quartäre Ammoniumverbindungen der Formel **(IV)** enthält, 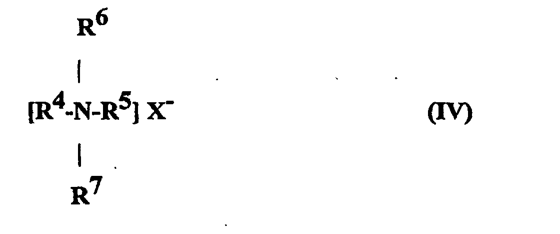 in der R⁴ und R⁵ unabhängig voneinander für einen linearen oder verzweigten, gegebenenfalls hydroxysubstituierten Alkyl- und/oder Alkenylrest mit 6 bis 22 Kohlenstoffatomen oder einen Benzylrest, R⁶ für R⁴ oder einen gegebenenfalls hydroxysubstituierten Alkylrest mit 1 bis 4 Kohlenstoffatomen, R⁷ für einen Alkylrest mit 1 bis 4 Kohlenstoffatomen und X für Halogenid steht.

9. Verwendung nach Anspruch 7, wobei man eine Kombination einsetzt, die Esterquats der Formel (**V**) enthält, 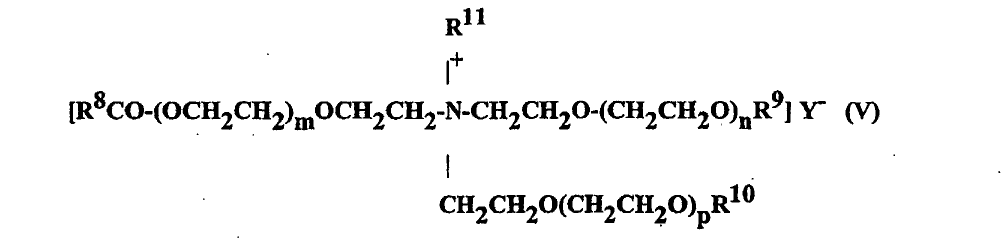 in der R⁸CO für einen Acylrest mit 6 bis 22 Kohlenstoffatomen, R⁹ und R¹⁰ unabhängig voneinander für Wasserstoff oder R⁸CO, R¹¹ für einen Alkylrest mit 1 bis 4 Kohlenstoffatomen oder eine (CH₂CH₂O)_{q}H-Gruppe, m, n und p in Summe für 0 oder Zahlen von 1 bis 12, q für Zahlen von 1 bis 12 und Y für Halogenid, Alkylsulfat oder Alkylphosphat steht.

10. Verwendung nach Anspruch 7, wobei man eine Kombination einsetzt, die Esterquats der Formel (**VI**) enthält, 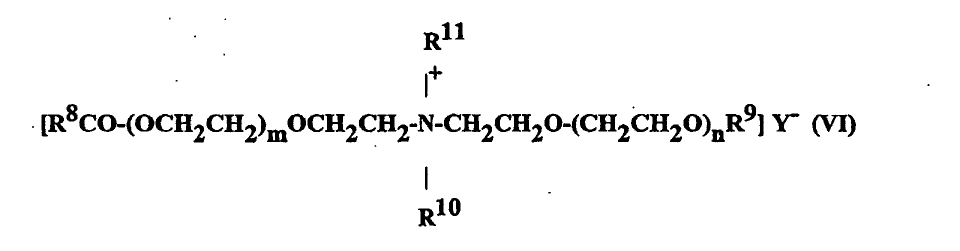 in der R⁸CO für einen Acylrest mit 6 bis 22 Kohlenstoffatomen, R⁹ für Wasserstoff oder R⁸CO, R¹⁰ und R¹¹ unabhängig voneinander für Alkylreste mit 1 bis 4 Kohlenstoffatomen, m und n in Summe für 0 oder Zahlen von 1 bis 12 und Y für Halogenid, Alkylsulfat oder Alkylphosphat steht.

11. Verwendung nach Anspruch 7, wobei man eine Kombination einsetzt, die Esterquats der Formel **(VII)** enthält, 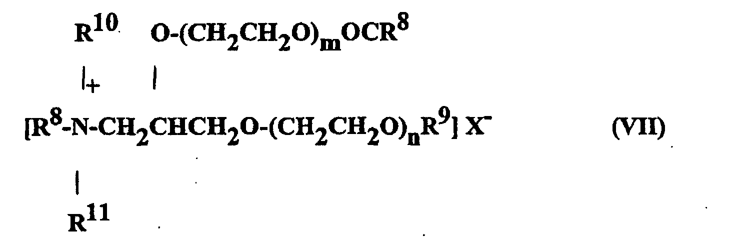 in der R⁸CO für einen Acylrest mit 6 bis 22 Kohlenstoffatomen, R⁹ für Wasserstoff oder R⁸CO, R⁹, R¹⁰ und R¹¹ unabhängig voneinander für Alkylreste mit 1 bis 4 Kohlenstoffatomen, m und n in Summe für 0 oder Zahlen von 1 bis 12 und Y für Halogenid, Alkylsulfat oder Alkylphosphat steht.

12. Verwendung nach Anspruch 7, wobei man eine Kombination einsetzt, die Fettsäurealkanolamide der Formel **(VIII)** enthält,
**R**^{**12**}**CO-NH-(CH**_{**2**}**)**_{**v**}**NH(CH**_{**2**}**)**_{**w**}**OH (VIII)**
in der R¹²CO für einen aliphatischen, gesättigten oder ungesättigten Acylrest mit 6 bis 22 Kohlenstoffatomen und n und m unabhängig voneinander für Zahlen von 1 bis 5 stehen.

13. Verwendung nach den Ansprüchen 1 bis 12, wobei man die Zuckertenside und die Stickstoffverbindungen im Gewichtsverhältnis 90 : 10 bis 10 : 90 einsetzt.

14. Verwendung nach den Ansprüchen 1 bis 6, wobei man Kombinationen einsetzt, die weiterhin Alkyl- und/oder Alkenyl(ether)- sulfate der Formel **(IX)** enthalten
**R**^{**13**}**O(CH**_{**2**}**CH**_{**2**}**O)**_{**b**}**-SO**_{**3**}**Z (IX)**
in der R¹³ für einen Alkyl- und/oder Alkenylrest mit 8 bis 22 Kohlenstoffatomen, b für 0 oder Zahlen von 1 bis 10 und Z für ein Alkali- und/oder Erdalkalimetall, Ammonium, Alkylammonium, Alkanolammonium oder Glucammonium steht.

15. Verwendung nach Anspruch 14, wobei man die Zuckertenside und die Alkyl-und/oder Alkenylsulfate im Gewichtsverhältnis 90 : 10 bis 10 : 90 einsetzt.

## Claims

1. The use of sugar surfactants selected from the group consisting of
(a) alkyl and/or alkenyl oligoglycosides and/or
(b) fatty acid N-alkyl polyhydroxyalkyl amides
for controlling fatty spew on leather.

2. The use claimed in claim 1, **characterized in that** alkyl and/or alkenyl oligoglycosides corresponding to formula **(I):**
**R**^{**1**}**O-[G]**_{**p**} **(I)**
where R¹ is an alkyl and/or alkenyl radical containing 4 to 22 carbon atoms, G is a sugar unit containing 5 or 6 carbon atoms and p is a number of 1 to 10,
are used.

3. The use claimed in claim 2, **characterized in that** alkyl oligoglucosides are used.

4. The use claimed in claims 1 to 3, **characterized in that** fatty acid N-alkyl polyhydroxyalkyl amides corresponding to formula **(II):** 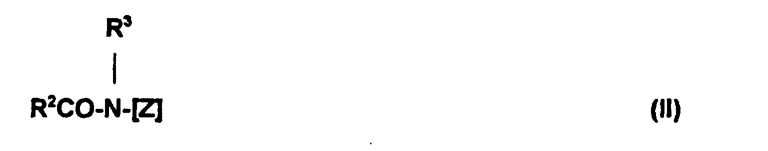 in which R²CO is an aliphatic acyl radical containing 6 to 22 carbon atoms, R³ is hydrogen, an alkyl or hydroxyalkyl radical containing 1 to 4 carbon atoms and [Z] is a linear or branched polyhydroxyalkyl radical containing 3 to 12 carbon atoms and 3 to 10 hydroxyl groups,
are used.

5. The use claimed in claim 4, **characterized in that** fatty acid N-alkyl glucamides are used.

6. The use claimed in claims 1 to 5, **characterized in that** a combination of compounds a) and b) is used.

7. The use claimed in claims 1 to 6, **characterized in that** nitrogen compounds selected from the group consisting of
(c) quaternary ammonium compounds,
(d) esterquats and/or
(e) fatty acid alkanolamides
are additionally used.

8. The use claimed in claim 7, **characterized in that** a combination containing quaternary ammonium compounds corresponding to formula **(IV):** 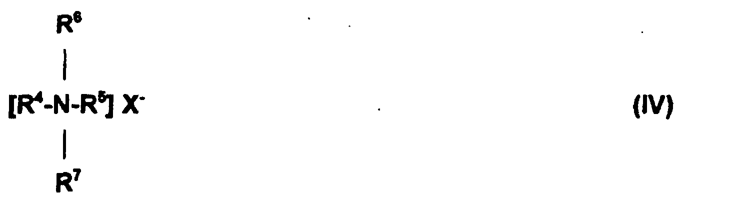 in which R⁴ and R⁵ independently of one another represent a linear or branched, optionally hydroxy-substituted alkyl and/or alkenyl radical containing 6 to 22 carbon atoms or a benzyl radical, R⁶ = R⁴ or is an optionally hydroxy substituted alkyl radical containing 1 to 4 carbon atoms, R⁷ is an alkyl radical containing 1 to 4 carbon atoms and X is halide,
is used.

9. The use claimed in claim 7, **characterized in that** a combination containing esterquats corresponding to formula **(V):** 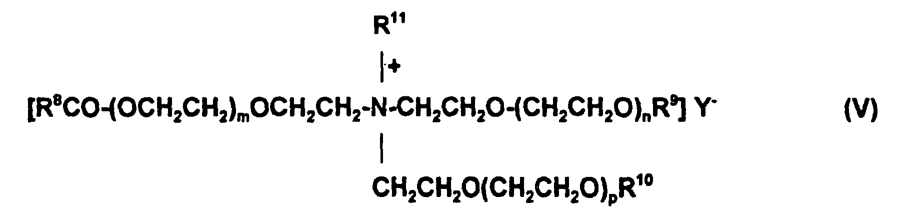 in which R⁸CO is an acyl radical containing 6 to 22 carbon atoms, R⁹ and R¹⁰ independently of one another represent hydrogen or have the same meaning as R⁸CO, R¹¹ is an alkyl radical containing 1 to 4 carbon atoms or a (CH₂CH₂O)_{q}H group, m, n and p together = 0 or a number of 1 to 12, q is a number of 1 to 12 and Y is halide, alkyl sulfate or alkyl phosphate,
is used.

10. The use claimed in claim 7, **characterized in that** a combination containing esterquats corresponding to formula **(VI):** 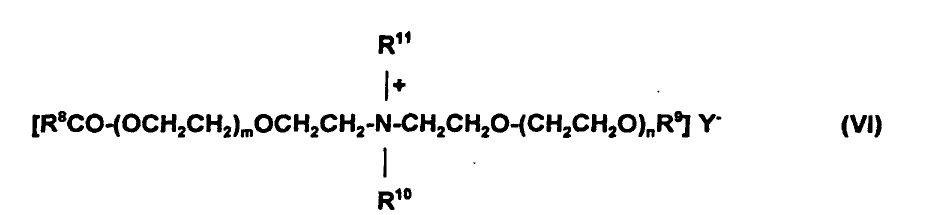 in which R⁸CO is an acyl radical containing 6 to 22 carbon atoms, R⁹ is hydrogen or has the same meaning as R⁸CO, R¹⁰ and R¹¹ independently of one another represent alkyl radicals containing 1 to 4 carbon atoms, m and n together = 0 or a number of 1 to 12 and Y is halide, alkyl sulfate or alkyl phosphate,
is used.

11. The use claimed in claim 7, **characterized in that** a combination containing esterquats corresponding to formula **(VII):** 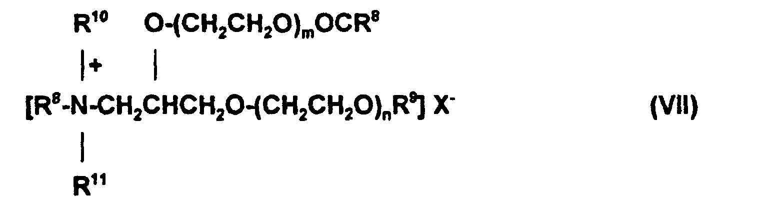 in which R⁸CO is an acyl radical containing 6 to 22 carbon atoms, R⁹ is hydrogen or has the same meaning as R⁸CO, R⁹, R¹⁰ and R¹¹ independently of one another represent alkyl radicals containing 1 to 4 carbon atoms, m and n together = 0 or a number of 1 to 12 and Y is halide, alkyl sulfate or alkyl phosphate,
is used.

12. The use claimed in claim 7, **characterized in that** a combination containing fatty acid alkanolamides corresponding to formula **(VIII):**
**R**^{**12**}**CO-NH-(CH**_{**2**}**)**_{**v**}**NH(CH**_{**2**}**)**_{**w**}**OH (VIII)**
in which R¹²CO is an aliphatic, saturated or unsaturated acyl radical containing 6 to 22 carbon atoms and v and w independently of one another are numbers of 1 to 5,
is used.

13. The use claimed in claims 1 to 12, **characterized in that** the sugar surfactants and the nitrogen compounds are used in a ratio by weight of 90:10 to 10:90.

14. The use claimed in claims 1 to 6, **characterized in that** combinations additionally containing alkyl and/or alkenyl (ether) sulfates corresponding to formula **(IX):**
**R**^{**13**}**O(CH**_{**2**}**CH**_{**2**}**O)**_{**b**}**-SO**_{**3**}**Z (IX)**
in which R¹³ is an alkyl and/or alkenyl radical containing 8 to 22 carbon atoms, b = 0 or a number of 1 to 10 and Z is an alkali metal and/or alkaline earth metal, ammonium, alkylammonium, alkanolammonium or glucammonium,
are used.

15. The use claimed in claim 14, **characterized in that** the sugar surfactants and the alkyl and/or alkenyl sulfates are used in a ratio by weight of 90:10 to 10:90.

## Revendications

1. Utilisation d'agent tensioactifs dérivés de sucres qui sont choisis dans le groupe qui est formé par :
a) des alkyl- et/ou alkényloligoglycosides ; et/ou
b) des N-alkylpolyhydroxyalkylamides d'acide gras,
pour l'amélioration de la brillance et de l'égalité lors de la teinture du cuir.

2. Utilisation selon la revendication 1,
dans laquelle
on met en oeuvre des alkyl- et/ou alkényl-oligo glycosides de formule (I)
R¹ O - [G]p (I)
dans laquelle R¹ représente un reste alkyle et/ou alkényle ayant de 4 à 22 atomes de carbone, G représente un reste de sucre ayant 5 ou 6 atomes de carbone et p représente des nombres allant de 1 à 10.

3. Utilisation selon la revendication 2,
dans laquelle
on utilise des alkyloligoglucosides.

4. Utilisation selon les revendications 1 à 3,
dans laquelle
on utilise des N-alkylpolyhydroxyalkylamides d'acide gras de formule (II) : 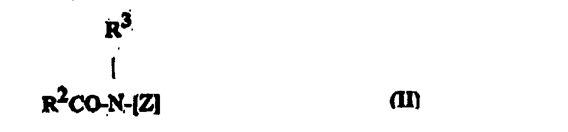 dans laquelle R² CO représente un reste acyle aliphatique ayant de 6 à 22 atomes de carbone R³ représente de l'hydrogène, un reste alkyle ou hydroxyalkyle ayant de 1 à 4 atomes de carbone, et [Z] représente un reste polyhydroxyalkyle linéaire ou ramifié ayant de 3 à 12 atomes de carbone et de 3 à 10 groupes hydroxyle.

5. Utilisation selon la revendication 4,
dans laquelle
on utilise des N-alkyl glucamides d'acide gras.

6. Utilisation selon les revendications 1 à 5,
dans laquelle
on utilise une combinaison des composés a) et b).

7. Utilisation selon les revendications 1 à 5,
dans laquelle
on utilise en supplément des composés azotés qui sont choisis dans le groupe forme de :
c) des composés d'ammonium quaternaire ;
d) des esterquats ; et/ou
e) des alkanolamides d'acide gras.

8. Utilisation selon la revendication 7,
dans laquelle on utilise une combinaison qui renferme des composés d'ammonium quaternaires de formule IV 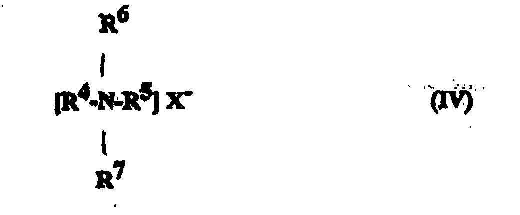 dans laquelle R⁴ et R⁵ indépendamment l'un de l'autre, représente un reste alkyle et/ou alkényle linéaire ou ramifié, éventuellement substitué par un hydroxy, ayant de 6 à 22 atomes de carbone ou un reste benzyle, R⁶ représente R⁴ ou un reste alkyle éventuellement substitué par un hydroxy, ayant de 1 à 4 atomes de carbone, R⁷ représente un reste alkyle ayant de 1 à 4 atomes de carbone et X représente un halogénure.

9. Utilisation selon la revendication 7,
dans laquelle
on utilise une combinaison qui renferme des estersquats de formule V 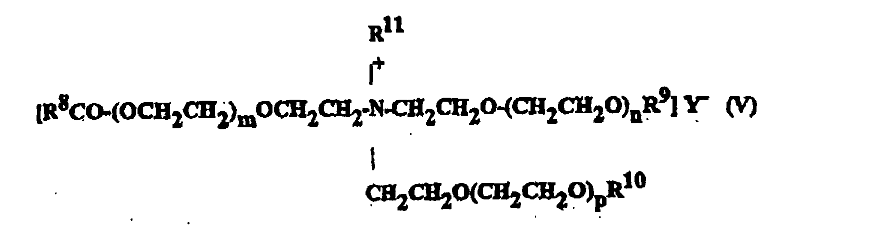 dans laquelle R⁸ CO représente un reste acyle ayant de 6 à 22 atomes de carbone, R⁹ et R¹⁰ indépendamment l'un de l'autre, représentent de l'hydrogène ou R⁸ CO ; R¹¹ représente un reste alkyle ayant de 1 à 4 atomes de carbone ou un groupe (CH₂ CH₂ O)₉H ; m, n et p globalement représentent 0 ou des nombres allant de 1 à 12, q représente des nombres allant de 1 à 12, et Y représente un halogénure, un alkylsulfate ou un alkyl phosphate.

10. Utilisation selon la revendication 7,
dans laquelle
on utilise une combinaison qui renferme les esterquats de formule VI 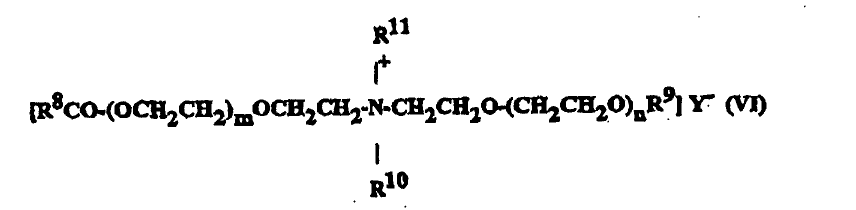 dans laquelle R⁸ CO représente un reste acyle ayant de 6 à 22 atomes de carbone R⁹ représente de l'hydrogène ou R⁸ CO, R¹⁰ et R¹¹ indépendamment l'un de l'autre, représentent des restes alkyle ayant de 1 à 4 atomes de carbone, m et n globalement représentent 0 ou des nombres allant de 1 à 12, et Y représente un halogénure, un alkylsulfate ou un alkylphosphate.

11. Utilisation selon la revendication 7,
dans laquelle on utilise une combinaison qui renferme des esterquats de formule VII 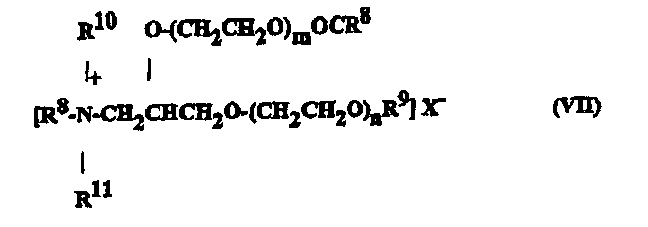 dans laquelle R⁸ CO représente un reste acyle ayant de 6 à 22 atomes de carbone, R⁹ représente de l'hydrogène ou R⁸ CO, R⁹, R¹⁰ et R¹¹ indépendamment l'un de l'autre représentent des restes alkyle ayant de 1 à 4 atomes de carbone, m et n globalement représentent 0 et des nombres allant de 1 à 12, et Y représente un halogénure, un alkyl sulfate ou un alkyl phosphate.

12. Utilisation selon la revendication 7,
dans laquelle
on utilise une combinaison qui renferme des alkanolamides d'acide gras de formule VIII
**R**^{**12**}**CO-NH-(CH**_{**2**}**)**_{**v**}**NH(CH**_{**2**}**)**_{**w**}**OH (VIII)**
dans laquelle R¹² CO représente un reste acyle aliphatique, saturé ou non saturé ayant de 6 à 22 atomes de carbone, et n et m indépendamment l'un de l'autre représentent des nombres allant de 1 à 5.

13. Utilisation selon les revendications 1 à 12,
dans laquelle
les agents tensioactifs dérivés de sucre et les composés azotés sont utilisés dans le rapport pondéral de 90 : 10 à 10 : 90.

14. Utilisation selon les revendications 1 à 6,
dans laquelle
on utilise des combinaisons qui renferment en outre des sulfates (d'éther) d'alkyle et/ou d'alkényle de formule IX
**R**^{**13**}**O(CH**_{**2**}**CH**_{**2**}**O)**_{**b**}**-SO**_{**3**}**Z (IX)**
dans laquelle R¹³ représente un reste alkyle- et/ou alkényle ayant de 8 à 22 atomes de carbone, b représente 0 ou des nombres allant de 1 à 10 et Z représente un métal alcalin et/ou alcalino terreux de l'ammonium, un alkyl ammonium, un alkanol ammonium ou un glucammonium.

15. Utilisation selon la revendication 14,
dans laquelle
on utilise les agents tensioactifs dérivés de sucre et les alkyl- et/ou alkényl- sulfates dans un rapport pondéral de 90 : 10 à 10 : 90.
